(19) Europäisches Patentamt

European Patent Office

Office européen des brevets

(11) Veröffentlichungsnummer: **0 062 780**
**B1**

(12) **EUROPÄISCHE PATENTSCHRIFT**

(45) Veröffentlichungstag der Patentschrift:
**27.12.84**

(21) Anmeldenummer: **82102272.0**

(22) Anmeldetag: **19.03.82**

(51) Int. Cl.³: **C 08 G 18/70,** C 08 G 18/08,
C 08 G 18/80, C 09 D 3/72,
C 09 J 3/16, C 09 K 3/10

(54) **Lagerstabile, hitzehärtbare Stoffmischungen aus Polyisocyanat und Polyol, Verfahren zu deren Herstellung und Verwendung.**

(30) Priorität: **27.03.81 DE 3112054**

(43) Veröffentlichungstag der Anmeldung:
**20.10.82 Patentblatt 82/42**

(45) Bekanntmachung des Hinweises auf die Patenterteilung:
**27.12.84 Patentblatt 84/52**

(84) Benannte Vertragsstaaten:
**AT BE DE FR GB IT NL SE**

(56) Entgegenhaltungen:
**DE - A - 1 570 548**
**DE - A - 2 626 555**
**US - A - 2 858 298**

(73) Patentinhaber: **BASF Farben + Fasern AG,**
**Max-Winkelmann-Strasse 80, D-4400 Münster-Hiltrup (DE)**

(72) Erfinder: **Blum, Rainer, Bannwasserstrasse 58,**
**D-6700 Ludwigshafen (DE)**
Erfinder: **Lehner, August, Wachenheimer Strasse 13,**
**D-6701 Roedersheim-Gronau (DE)**
Erfinder: **Schenck, Hans-Uwe, Dr., Erlenweg 6,**
**D-6706 Wachenheim (DE)**

## Beschreibung

Die Erfindung betrifft bei Raumtemperatur lagerstabile hitzehärtbare Stoffmischungen aus Polyisocyanat und Polyol, wobei das Polyisocyanat in Form diskreter Teilchen, die an ihrer Oberfläche desaktiviert sind, im Polyol dispergiert ist, Verfahren zu deren Herstellung ihre Verwendung.

Die Herstellung von Kombinationen von Polyisocyanaten mit Bindemitteln, die mit Isocyanatgruppen reaktionsfähige Gruppierungen enthalten, und deren unmittelbare Anwendung ist bekannt.

Grosse Schwierigkeiten bereitet jedoch die Tatsache, dass die Isocyanatgruppe schon bei Raumtemperaturen mit den vorgesehenen Reaktionspartnern, z.B. Polyolen, oder Polyaminen reagiert, d.h. es lassen sich keine lagerstabilen Kombinationen formulieren.

Um diese Schwierigkeit zu umgehen, werden häufig Zweikomponentensysteme verwendet. Die Reaktionspartner werden dabei in separaten Zubereitungen aufbewahrt und erst unmittelbar vor der Applikation gemischt, worauf die Reaktion dann spontan oder wärme- und/oder katalysatorbeschleunigt abläuft. Als Beispiel für eine solche Masse sei hier die US-A Nr. 4029626 genannt. Die Nachteile dieses Verfahrens liegen in der Notwendigkeit getrennter Zubereitung und Lagerung der beiden Komponenten, der Schwierigkeiten beim genauen Dosieren und guten Mischen vor der Applikation und in der Gefahr der Verstopfung des Misch- und Applikationsgerätes durch frühzeitige Reaktion.

Eine andere bekannte Methode zur Herstellung lagerbeständiger Polyisocyanatmassen geht von unvernetzten sogenannten Präpolymeren aus, die nur wenig freies Isocyanat enthalten, wobei als Vernetzungsmittel die Luftfeuchtigkeit dient. Diese Methode wird beispielsweise in der FR-A Nr. 1237936 beschrieben. Nachteilig ist in diesem Falle, dass die Härtung von der Oberfläche aus nur sehr langsam in die Tiefe der Beschichtung vordringt, die Endeigenschaften erst nach Wochen oder Monaten erreicht werden und z.B. zwischen grossen Flächen oder in Höhlungen gar keine Härtung erfolgt.

Stabile Systeme lassen sich auch formulieren, wenn die Polyisocyanate zunächst mit einem monofunktionellen Reaktionspartner umgesetzt werden. Die erhaltenen Addukte werden als verkappte oder blockierte Isocyanate bezeichnet, wenn sie weniger thermostabil sind als die Produkte des später beabsichtigten Vernetzungsreaktion. Unter Hitzeeinwirkung wird das Verkappungsmittel abgespalten und das Polyisocyanat geht unter Vernetzung die thermostabilere Bindung ein.

Dieses Prinzip wird z.B. im Vieweg/Höchtlen, „Kunststoff-Handbuch", Bd. VII, „Polyurethane" (Carl Hanser Verlag, München 1966), S. 11 ff., beschrieben und ist auch die Grundlage einer Reihe von Patentschriften, z.B. der DE-B Nrn. 2640295, 2612638, 2639491 bzw. der EP-A Nr. 000060. Technische und wirtschaftliche Nachteile solcher Formulierungen werden durch das abgespaltete Verkappungsmittel gegeben, das – wenn es in der vernetzten Masse verbleibt – deren Eigenschaften verändert oder – wenn es verdampft – zurückgewonnen bzw. aus der Abluft entfernt werden muss.

In den DE-B Nr. 1570548 und DE-A Nr. 2842805 werden bei über 100 bzw. bei über 130° C schmelzende Polyisocyanate beschrieben, die mit speziellen Polyolen lagerstabile Kombinationen ergeben, die sich unter Erwärmung zu Beschichtungen für Gewebe bzw. Gewebeschläuchen aushärten lassen.

Der technische Nachteil der diesen Druckschriften zu entnehmenden Kombinationen ist, dass sie, um gute Lagerstabilität zu erreichen, auf eine sehr enge Auswahl speziell aufgebauter Polyole angewiesen sind und daher beispielsweise für eine Reihe von Anwendungen gar nicht geeignet sind.

Aufgabe der vorliegenden Erfindung ist es, lagerstabile hitzehärtbare flüssige bis pastenförmige Stoffmischungen aus Polyisocyanat und Polyol aufzuzeigen, die die oben aufgeführten Nachteile nicht aufweisen.

Gegenstand der vorliegenden Erfindung sind bei Raumtemperatur lagerstabile hitzehärtbare Stoffmischungen aus Polyisocyanat und Polyol, das ggf. Zusätze von Schutzkolloiden, inerten Lösungsmitteln, Weichmacher, Pigment, Füllstoffe, Farbstoffe oder andere in der Lacktechnik übliche Hilfsstoffe enthält, die dadurch gekennzeichnet sind, dass das Polyisocyanat in Form von diskreten Teilchen mit Teilchendurchmessern zwischen 0,1 bis 150 μm im Polyol, das ggf. die genannten Zusätze enthält, dispergiert ist und die Polyisocyanatteilchen an ihrer Oberfläche desaktiviert sind, mit der Massgabe, dass 0,5 bis 20 Eq-% der insgesamt vorhandenen Isocyanatgruppen desaktiviert sind.

Zur Desaktivierung werden vorzugsweise primäre oder sekundäre Amine oder Wasser verwendet.

Gegenstand der vorliegenden Erfindung ist ausserdem ein Verfahren zur Herstellung dieser Stoffmischungen, wobei das Polyisocyanat bei Temperaturen unterhalb 40° C im Polyol dispergiert wird und das Desaktivierungsmittel entweder schon im Polyol enthalten ist oder der Dispersion des Polyisocyanats im Polyol zumindest teilweise nachträglich zugefügt wird.

Gegenstand der vorliegenden Erfindung ist auch die Verwendung der erfindungsgemässen Stoffmischungen als Beschichtungsmittel, Verklebungsmittel und Dichtungsmassen auf Metallen und Nichtmetallen sowie insbesondere als Unterbodenschutzmassen für Kraftfahrzeuge.

Die vorliegende Erfindung vermeidet die Nachteile des oben aufgezeigten Standes der Technik dadurch, dass die Polyisocyanate in Form diskreter Teilchen in den Polyolen dispergiert und die dispersen Teilchen an ihrer Oberfläche durch chemische Reaktionen desaktiviert sind. Für die Desaktivierung wird nur ein Teil der Isocyanatgruppen verbraucht, so dass die Teilchen in ihrem Inneren noch reaktionsfähig bleiben.

Bei der Hitzehärtung wird die Phasentrennung durch Löse-, oder Schmelzvorgänge aufgehoben und die Vernetzung kann stattfinden.

Zu den Aufbaukomponenten der erfindungsgemässen Stoffmischungen ist im einzelnen folgendes auszuführen.

Geeignete Polyisocyanate sind die üblichen aliphatischen, cycloaliphatischen und aromatischen Di- und Polyisocyanate, wie sie z.B. erhalten werden durch Addition von Diisocyanaten an Di-, Tri- oder Polyole, oder aus Diisocyanaten durch Dimerisierung zu Urethdionen, Trimerisierung zu Isocyanuraten und mit Aminen oder Wasser zu Biureten. Hierfür sind u.a. z.B. folgende Diisocyanate geeignet. Diphenylmethandiisocyanat, Toluylendiisocyanat, Isophorondiisocyanat und Hexamethylendiisocyanat.

Bevorzugte Polyisocyanate sind bei Raumtemperatur feste Polyisocyanate, z.B. das Additionsprodukt aus Toluylendiisocyanat und Trimethylolpropan oder das Cyanurat aus 3 mol Toluylendiisocyanat und insbesondere schwerlösliches, pulverförmiges dimerisiertes Toluylendiisocyanat mit Urethdiongruppen.

Geeignete Polyole sind die in der Polyurethanchemie üblicherweise verwendeten Polyesterole, Polyetherole und hydroxylgruppenhaltigen Polymerisate, beispielsweise Copolymerisate aus olefinisch ungesättigten Monomeren ohne aktive Wasserstoffe und olefinisch ungesättigten Monomeren mit aktivem Wasserstoff.

Geeignete Monomere ohne aktiven Wasserstoff sind z.B. Vinylaromaten, wie Styrol oder Vinyltoluol, Olefine, wie Ethylen oder Propylen, Acryl- oder Methacrylsäureester, wie z.B. Butylacrylat, 2-Ethylhexylacrylat, Methylmethacrylat, Vinylester von geradkettigen oder verzweigten Carbonsäuren, wie z.B. Vinylacetat oder Vinylpropionat, sowie Vinylether, wie z.B. Vinylisobutylether.

Geeignete Monomere mit gegenüber Isocyanatgruppen reaktivem Wasserstoff sind z.B. Mono(meth)acrylester von mehrwertigen, insbesondere zweiwertigen Alkoholen, wie z.B. Butandiolmonocrylat, Hydroxypropyl(meth)acrylat, andere copolymerisierbare, olefinisch ungesättigte hydroxylgruppenhaltige Verbindungen, wie z.B. Vinylglykol, sowie copolymerisierbare, olefinisch ungesättigte Verbindungen mit Amin- und/oder Amidgruppen, wie z.B. Acrylamid und Methacrylamid.

Die erfindungsgemässen Stoffmischungen enthalten die Polyisocyanate in Form diskreter Teilchen mit Teilchendurchmessern zwischen 0,1 bis 150, vorzugsweise 1 bis 50 µm, im Polyol dispergiert, wobei Isocyanatgruppen und Hydroxylgruppen im allgemeinen in Mengenverhältnissen von 0,5 : 1 bis 1 : 0,5, vorzugsweise 0,9 : 1 bis 1 : 0,9, vorliegen.

Die dispergierten Polyisocyanatteilchen sind an ihrer Oberfläche desaktiviert, so dass bei Raumtemperatur keine Reaktion der Polyisocyanatteilchen mit dem Polyol eintritt.

Das Desaktivierungsmittel wird zweckmässigerweise so gewählt, dass es an der Oberfläche der Polyisocyanatteilchen durch chemische oder physikalische Kräfte gebunden ist und so eine Phasentrennung zwischen Polyisocyanatteilchen und Polyol bewirkt wird.

Für die chemische Desaktivierung werden 0,5 bis 20, vorzugsweise 1 bis 10 Eq-% der insgesamt vorhandenen Isocyanatgruppen mit dem Desaktivierungsmittel zur Reaktion gebracht.

Als Desaktivierungsmittel kommen in Frage: Wasser, Mono- und Polyamine, Mono- und Polyalkohole. Besonders gut geeignet sind längerkettige Monoamine, z.B. Stearylamin, die zu einer Art aufgepfropfter Emulgatoren abreagieren. Höhermolekulare Polyamine, wie z.B. Polyamidamine und hydroxylterminierte Polymere wie z.B. hydroxylterminierte Polybutadienöle, reagieren unter Ausbildung aufgepfropfter Schutzkolloide. Besonders geeignet zur Desaktivierung der Isocyanatgruppen an der Oberfläche der Polyisocyanatteilchen, d.h. zur Stabilisierung der Isocyanat/Polyol-Dispersionen sind auch Reaktionen, die auf den Isocyanaten zu Harnstoff, bzw. Polyharnstoffstrukturen führen, weil diese in den meisten Polyolen und organischen Lösungsmitteln unlöslich sind. Solche Harnstoffe bzw. Polyharnstoffe bildenden Reagenzien sind Wasser und primäre oder sekundäre Amine, wobei kurzkettige Diamine, wie Ethylendiamin oder Propylendiamin bevorzugt sind. Die aus diesen kurzkettigen Diaminen gebildeten Polyharnstoffe sind organophober als die aus längerkettigen Diaminen gebildeten und wirken deshalb besser stabilisierend. Eine bevorzugte Verfahrensweise geht von schwerlöslichem pulverförmigem dimerisiertem Toluylendiisocyanat aus. Weil Isocyanat mit primären Aminen erheblich schneller reagiert als mit Polyolen, kann durch Einführen von pulverförmigem dimerisiertem Toluylendiisocyanat in z.B. ethylendiaminhaltiges Polyetherol unmittelbar eine lagerstabile Mischung erhalten werden.

Ein Vorteil dieses Verfahrens ist dadurch gegeben, dass die Harnstoffstrukturen bei höherer Temperatur mit weiteren Isocyanaten unter Bildung von Biuretstrukturen weiterreagieren, d.h. das Desaktivierungsmittel wird in das vernetzte System eingebaut und hinterlässt keine Inhomogenität.

In einer besonderen Ausführung können die Stoffmischungen noch zusätzlich 0,5 bis 60% üblicher Weichmacher wie Ester der Phthal-, Adipin-, Sebacin- oder Phosphorsäure, hochsiedende Kohlenwasserstoffe, chlorierte Kohlenwasserstoffe, epoxidierte natürliche Öle oder niedermolekulare Polyester enthalten.

Ausführliche Erläuterungen des Begriffes Weichmacher sind in D. Weinmann, „Beschichten mit Lacken und Kunststoffen", Verlag W. A. Colomb, Stuttgart 1967, S. 103 ff., gegeben.

Zur Einstellung auf spezielle Verarbeitungsbedingungen bzw. zur Erzielung besonderer Effekte können die erfindungsgemässen Stoffmischungen, im allgemeinen im Polyol Zusätze von Schutzkolloiden, beispielsweise in Mengen von 0,1 bis 15%, inerten Lösungsmitteln, wie Benzine, Ester, Ketone, Ether, Glykolether und Pigmenten, wie Russ, Titandioxid, organische und anorgani-

5            0 062 780           6

sche Farbpigmente, Füllstoffen, wie z.B. Talkum, Tonerde, Kreide und Quarzmehl, Farbstoffen oder anderen in der Lacktechnik üblichen Hilfsstoffen enthalten.

Die Herstellung der erfindungsgemässen Stoffmischungen erfolgt im allgemeinen unter Verwendung üblicher Dispergier- und Mischaggregate. Das Polyisocyanat wird bei Temperaturen unterhalb 40° C, vorzugsweise bei Temperaturen zwischen 0 und 25° C im Polyol dispergiert, wobei entweder das Polyol bereits die gesamte Menge des Desaktivierungsmittels enthält, oder das Desaktivierungsmittel kurz nach dem Dispergiervorgang der Mischung zugegeben wird.

Die erfindungsgemässen Stoffmischungen sind bei 25° C mindestens über 3 Monate gut lagerstabil, ohne dass ein Reaktivitätsverlust oder eine irreversible Veränderung der Masse zu beobachten wäre. Eine eventuell auftretende Viskositätserhöhung kann durch einfaches Umrühren beseitigt werden.

Die Härtung der erfindungsgemässen Stoffmischungen erfolgt im allgemeinen bei 70 bis 180° C.

Die erfindungsgemässen Stoffmischungen können in flüssiger oder pastöser Form verwendet werden und eignen sich als Beschichtungsmittel, Verklebungsmittel und Dichtungsmassen. Als Substrate kommen dabei Metalle, wie Stahl, Aluminium, Kupfer, Magnesium, die auch mit einer Grundierung überzogen sein können und Nichtmetalle, wie Glas, Keramik und wärmebeständige Kunststoffe in Frage.

Besonders vorteilhaft lassen sich die erfindungsgemässen Stoffmischungen als Unterbodenschutzmasse für Kraftfahrzeuge verwenden.

Die nachfolgenden Beispiele sollen die Erfindung verdeutlichen, ohne sie jedoch auf diese Beispiele einzuschränken.

Die in den Beispielen genannten Teile und Prozente sind, soweit nicht anders angegeben, Gewichtsteile und Gewichtsprozente.

A) *Herstellung einer ca. 70%igen Lösung eines hydroxylgruppenhaltigen Polyacrylatharzes:*

300 Teile Diethylhexylphthalat werden unter Stickstoff auf 170° C erwärmt und unter Rühren Zulauf 1, bestehend aus 315 Teilen Butylacrylat, 126 Teilen Methylmethacrylat, 119 Teilen Styrol und 140 Teilen Hydroxypropylacrylat innerhalb von 2 h und Zulauf 2, bestehend aus 31,5 Teilen t-Butylperbenzoat innerhalb von 3 h zulaufen lassen.

Schliesslich hält man noch 2 h lang eine Temperatur von 170° C aufrecht.

B)1. *Stabilisiertes dimeres Toluylendiisocyanat:*

50 Teile dimeres Toluylendiisocyanat werden in 150 Teilen Aceton mit einem Dissolver fein verteilt; dann werden 6 Teile Wasser zugegeben und es wird bei Raumtemperatur 6 h gerührt. Der Niederschlag wird abfiltriert und 6 h bei 40° C im Vakuum getrocknet. Es wird ein feines weisses Pulver (Teilchengrösse 5 bis 40 μm) erhalten.

B)2. *Stabilisiertes dimeres Toluylendiisocyanat:*

100 Teile dimeres Toluylendiisocyanat werden in 300 Teilen Cyclohexan mit einem Dissolver fein verteilt; unter kräftigem Rühren lässt man 1,73 Teile Ethylendiamin eintropfen und lässt 2 h bei Raumtemperatur nachrühren. Der Niederschlag wird abfiltriert und 6 h bei 40° C im Vakuum getrocknet. Man erhält ein feines weisses Pulver (Teilchengrösse 5 bis 40 μm).

*Vergleichsbeispiel 1*

50 Teile der 70%igen Lösung des hydroxylgruppenhaltigen Polyacrylatharzes A und 27 Teile dimerisiertes Toluylendiisocyanat werden mit einem Dissolver homogenisiert.

*Beispiel 1*

Wie Vergleichsbeispiel 1, aber anstelle des dimerisierten Toluylendiisoxyanats wird das stabilisierte Produkt B1 eingesetzt.

*Beispiel 2*

Wie Beispiel 1, aber es wird das stabilisierte Probukte B2 eingesetzt.

*Vergleichsbeispiel 2*

100 Teile hydroxylgruppenhaltiges Polyacrylatharz, 65%ig in Essigester (OH-Zahl des Festharzes 80) und 16,6 Teile dimerisiertes Toluylendiisocyanat werden mit einem Dissolver zu einer homogenen Paste gemischt.

*Beispiel 3*

Wie Vergleichsbeispiel 2, aber es wird das stabilisierte dimere Toluylendiisocyanat B1 eingesetzt.

*Beispiel 4*

Wie Beispiel 3, aber es wird das stabilisierte Produkte B2 eingesetzt.

*Vergleichsbeispiel 3*

84 Teile flüssiges handelsübliches Polyetherol mit einer OH-Zahl von 320, 86 Teile dimeres Toluylendiisocyanat und 40 Teile Diethylhexylphthalat werden in einem Dissolver homogenisiert.

*Beispiel 5*

Wie Vergleichsbeispiel 3, aber anstelle des dimeren Toluylendiisocyanats wird das stabilisierte Produkte B1 eingesetzt.

*Beispiel 6*

Wie Vergleichsbeispiel 3, aber anstelle des dimeren Toluylendiisocyanats wird das stabilisierte Produkt B2 eingesetzt.

*Prüfung der Beispiele*

Die nach den Beispielen 1 bis 6 erhaltenen Stoffmischungen ergeben gut fliessfähige Pasten. Diese werden mit einem Rakel mit 1 mm Spalthöhe auf entfettete Stahlbleche aufgezogen und 20 min bei 160° C vernetzt. In allen Fällen werden zähelastische, klare, gut haftende Beschichtungen erhalten.

Nach einer Lagerung von einer Woche bei Raumtemperatur sind die nach den Vergleichsbeispielen 1 bis 3 erhaltenen Stoffmischungen nicht mehr aufrührbar und zu klumpigen, bröseligen Massen erstarrt. Die erfindungsgemäss nach den Beispielen 1 bis 6 erhaltenen Stoffmischungen sind zwar nach einer Woche etwas verdickt, lassen sich aber durch rühren wieder auf nahezu die ursprüngliche Konsistenz verflüssigen. Beschichtungen aus diesen wieder aufgerührten Pasten unterscheiden sich nicht von denen aus frischen Pasten.

Auch nach zwei bzw. drei Wochen Lagerzeit lassen sich die erfindungsgemässen Stoffmischungen durch Aufrühren verflüssigen und zu Beschichtungen mit guten mechanischen Eigenschaften verarbeiten.

## Patentansprüche

1. Bei Raumtemperatur lagerstabile hitzehärtbare Stoffmischungen aus Polyisocyanat und Polyol, das gegebenenfalls Zusätze von Schutzkolloiden, inerten Lösungsmitteln, Weichmacher, Pigment, Füllstoffe, Farbstoffe oder andere in der Lacktechnik übliche Hilfsstoffe enthält, dadurch gekennzeichnet, dass das Polyisocyanat in Form von diskreten Teilchen mit Teilchendurchmessern zwischen 0,1 bis 150 μm im Polyol, das gegebenenfalls die genannten Zusätze enthält, dispergiert ist und die Polyisocyanatteilchen an ihrer Oberfläche desaktiviert sind, mit der Massgabe, dass 0,5 bis 20 Eq-% der insgesamt vorhandenen Isocyanatgruppen desaktiviert sind.

2. Stoffmischungen nach Anspruch 1, dadurch gekennzeichnet, dass zur Desaktivierung ein primäres oder sekundäres Amin oder Wasser verwendet worden ist.

3. Verfahren zur Herstellung der Stoffmischungen nach einem der beiden Ansprüche 1 oder 2, dadurch gekennzeichnet, dass das Polyisocyanat bei Temperaturen unterhalb 40° C im Polyol dispergiert wird und das Desaktivierungsmittel entweder schon im Polyol enthalten ist oder der Dispersion des Polyisocyanats im Polyol zumindest teilweise nachträglich zugefügt wird.

4. Verwendung der Stoffmischungen nach einem der beiden Ansprüche 1 oder 2 als Beschichtungsmittel, Verklebungsmittel oder Dichtungsmassen auf Metallen und Nichtmetallen.

5. Verwendung der Stoffmischungen nach einem der beiden Ansprüche 1 oder 2 als Unterbodenschutzmassen für Kraftfahrzeuge.

## Claims

1. A thermosetting mixture of a polyisocyanate and polyol which is storage-stable at room temperature and may contain, as additives, protective colloids, inert solvents, plasticizers, pigments, fillers, dyes or other auxiliaries usually used in surface coatings, wherein the polyisocyanate is dispersed in the polyol, which may contain the above additives, in the form of discrete particles having diameters of from 0.1 to 150 μm, and the polyisocyanate particles are deactivated on their surface, with the proviso that from 0.5 to 20 Eq-% of all the isocyanate groups present are deactivated.

2. A mixture as claimed in Claim 1, wherein a primary or secondary amine or water has been used for the deactivation.

3. A process for the preparation of a mixture as claimed in Claim 1 or 2, wherein the polyisocyanate is dispersed in the polyol at below 40° C, and either the polyol already contains the deactivating agent or at least some of the deactivating agent is subsequently added to the dispersion of the polyisocyanate in the polyol.

4. The use of a mixture as claimed in Claim 1 or 2 as a coating agent, adhesive or sealing composition on metals or non-metals.

5. The use of a mixture as claimed in Claim 1 or 2 as an undersealing composition for motor vehicles.

## Revendications

1. Mélanges de matières à base de polyisocyanate et de polyol, stables au stockage à la température ordinaire et durcissables à la chaleur, le polyol contenant éventuellement des colloïdes protecteurs, un plastifiant, un pigment, une matière de charge, un colorant ou d'autres additifs classiques dans le domaine des vernis, caractérisé en ce que le polyisocyanate est dispersé, sous forme de particules séparées ou distinctes — d'une granulométrie de 0,1 à 150 μm — dans le polyol contenant éventuellement le ou les additifs énumérés, les particules de polyisocyanate étant superficiellement désactivées, la désactivation concernant entre 0,5 et 20 % d'équivalents de la totalité des groupes isocyanate présents.

2. Mélange de matières suivant la revendication 1, caractérisé en ce que la désactivation est réalisée à l'aide d'une amine primaire ou secondaire ou d'eau.

3. Procédé de préparation de mélanges de matières suivant l'une des revendications 1 ou 2, caractérisé en ce que le polyisocyanate est dispersé dans le polyol à une température inférieure à 40° C, l'agent désactivant étant incorporé au polyol ou ajouté, au moins en partie, à la dispersion du polyisocyanate dans le polyol.

4. Utilisation de mélanges de matières suivant l'une des revendications 1 ou 2 comme produits de revêtement, d'encollage ou d'étanchéification sur des métaux ou des substances non métalliques.

5. Utilisation de mélanges de matières suivant l'une des revendications 1 ou 2 comme matières de protection des parties inférieures des carrosseries de véhicules automobiles.